# EUROPEAN PATENT APPLICATION

(11) **EP 1 650 481 A1**
(43) Date of publication of application: **26.04.2006**
(21) Application number: 05109740.0
(22) Date of filing: 19.10.2005
(51) Int. Cl.: F16J 15/32, F16C 33/78

(54) **A sealing device for bearings**

(30) Priority: 20.10.2004 IT TO20040728
(71) Applicant: RFT S.p.A., 10121 Torino (IT)
(72) Inventor: Foti, Claudio, 14010 Dusino San Michele (IT)
(74) Representative: Fioravanti, Corrado

(57) **Abstract**

In order to seal an annular gap (11) between the races (12, 13) of a rolling bearing, a sealing device (10) comprises a sealing gasket (16) of elastic material, having a V-shaped section, fixed to an annular shield (15) secured to one (12) of the bearing races, and an annular shield (14) secured to the other bearing race (13). The annular shield (14) forms a radial wall (20) extending towards the bearing race (12). The radial wall (20) is elastically contacted by an elongated flexible lip (18) of the gasket (16). The lip (18) has a free end portion (18a) projecting towards the wall (20). Only the tip (18e) of the free end portion contacts the wall (20). The end portion (18a) has a side surface (18f) facing the wall (20) but not sliding against this wall.

## Description

The present invention refers to a sealing device for bearings of motor vehicle wheel hubs. The invention is intended for use, particularly but not exclusively, with heavy motor vehicles.

With bearings of wheels hubs it is known to use sealing devices for hermetically sealing the annular gap defined between the bearing races.

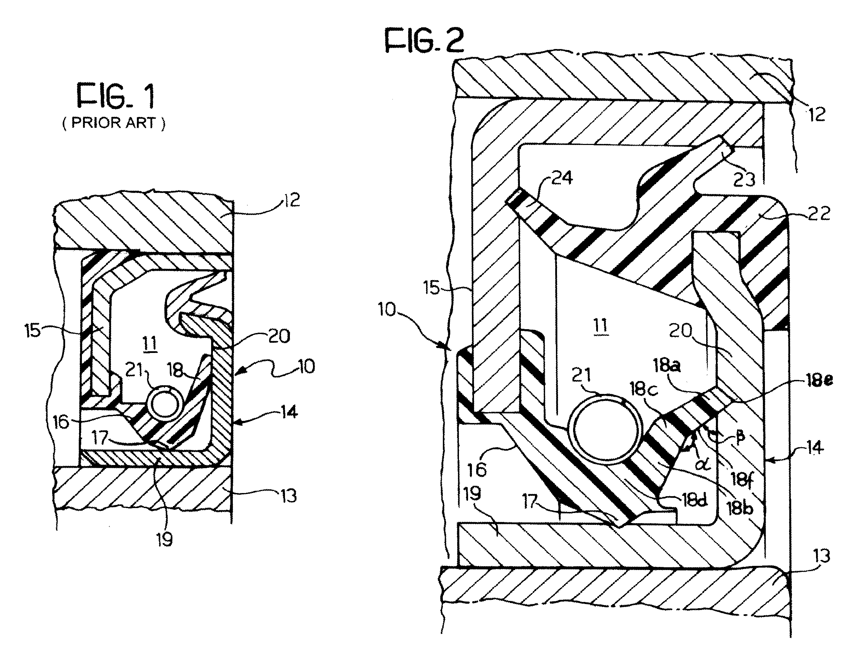

For a better understanding of the state of the art and problems related thereto, there will be at first described a sealing device of known kind, reference being made to figure 1 of the appended drawings, which is a partial axial cross-section of a sealing device mounted between the bearing races of a motor vehicle hub.

Referring to figure 1, a sealing device 10 serves to seal an annular gap 11 between the races 12 and 13 of a bearing. The sealing device 10 comprises a first metallic annular shield 14 (called *"flinger")* secured to the radially inner, stationary race 13 of the bearing and a second metallic annular shield 15 secured to the radially outer, rotating race 12 of the bearing. Fixed to the stationary shield 15 is a sealing gasket 16 of elastomeric material with a V shape having two sealing lips 17, 18 slidingly engaging the opposite shield 14. The radial sealing lip 17 is engaged against a cylindrical axial portion 19 of the shield 14. The axial sealing lip 18 is elongated and flexible and slidingly engages a radial wall portion 20 of the shield 14. Contact of the radial lip 17 is usually ensured by a circumferential spring 21.

Examples of sealing devices of the above-mentioned type are disclosed in EP-A-0 937 984 and EP-A-1 008 775.

Sealing devices of this type carry out the dual task of:
- preventing external polluting agents (water, dust, mud) from entering the inner parts of the bearing where the rolling elements (not shown) are located and, simultaneously,
- preventing any leak of the lubricant grease which is normally confined within the inner ambient of the bearing so as to lubricate the surfaces involved in the rolling.

Although sealing devices of the above mentioned type exhibit satisfactory sealing performances, it has been noticed that they may undergo a number of drawbacks that may adversely affect efficiency of the sealing device and, as a result, shorten the useful life of the bearing with which the sealing devices are associated.

Owing to the elongate shape of the axial sealing lip 18, the contact area between the axial lip 18 and the wall 20 is excessive, whereby an excessive friction develops overall between these two elements. Such a situation is sometimes further worsened due to a defective mounting of one of the two shields 14, 15, or owing to particularly high loads which the bearing is subjected to. It may therefore happen that the two shields of the sealing device are shifted one with respect to the other, and particularly that one is brought too near to the other in an axial direction, whereby the axial sealing lip 18 is pressed excessively against the radial wall 20 of the rotating shield 14. It will be understood that the contact pressure is never uniform over a broad area of contact, so that in certain zones the contact pressure will be zero o close to zero, and in other zones the contact pressure will be excessive. In these other zones friction is too high, whereby an early wear of the lip 18 occurs locally. As friction increases, the local temperature of the shield increases consequently, so that the rubber or elastomeric material which the lip 18 is made of tends to harden with time and loose elasticity. As a result, the sealing action fails and contaminating agents (water, dust, mud) are allowed to enter the bearing. The sealing action of the axial lip 18, when this acts over an area that is too broad, is also reduced because the sliding contact between the two elements is more affected by planarity errors of the radial wall portion 20 of the rotating shield 14.

As will be understood, a defective sealing device jeopardises the life of the bearing on which it is mounted, especially if the bearing has to work in an ambient where there is a great quantity of polluting agents, such as is the case of wheel hub bearings on heavy motor vehicles. The sealing devices of the type illustrated in figure 1 have proven to be unable of insuring an efficient sealing action for a mileage of 1.600.000 km, as required by certain heavy motor vehicle manufacturers.

It is an object of the present invention to provide an improved sealing device capable of obviating the above discussed drawbacks.

This and other objects and advantages, that will be better understood herein after, are attained according to the present invention by a sealing device having the features defined in the appended claims.

The features and the advantages of the invention will appear from the detailed description of the embodiment thereof, given by way of example, reference being made to the accompanying drawings, provided by way of non-limitative indication, in which:
figure 1 is a partial axial cross-sectional view of a sealing device of conventional design mounted in a bearing;
figure 2 is a partial axial cross-sectional view of a sealing device according to the present invention, mounted in a bearing;
figure 3 is an axial cross-sectional view schematically showing the working position of a sealing gasket of the conventional device of figure 1; and
figure 4 is an axial cross-sectional view schematically showing the working position of a sealing gasket of the device according to the invention of figure 2.

With reference to figure 2, and using the same reference numbers already used to indicate same or similar parts discussed with reference to figure 1, a gasket 16 of elastomeric material having a substantially V-shaped cross-section is fixed to a metallic annular shield 15 secured to an outer, rotatable race 12 of a bearing. An annular metallic shield 14 of conventional design is fixed to the inner stationary race 13 of the bearing. The shield 14 forms a cylindrical axial portion 19 and a radial wall portion 20 extending towards the outer race 12 of the bearing.

The gasket 16 forms a radial sealing lip 17 intended to radially contact the cylindrical portion 19 of the shield 14. Preferably, the radial contact of the lip 17 against the cylindrical portion 19 of the shield 14 is guaranteed by a circumferential spring 21. Further, the gasket 16 forms an elongated axial sealing lip 18 for elastically contacting the radial wall 20 of the shield 14.

The shield 14 carries a gasket 22 with lips 23, 24 contacting the shield 15. In figure 2, the gaskets 16 and 22 are shown in their non-deformed conditions.

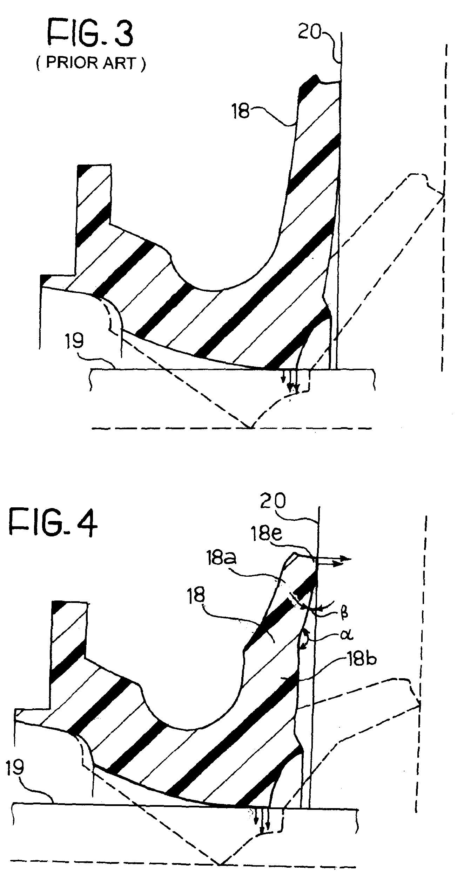

According to the present invention, the lip 18 has a free end portion (or distal portion) 18a extending from a proximal portion 18b and protruding towards and against the wall 20, forming an obtuse angle α with the proximal portion 18b and an acute angle β with the radial plane of the wall 20. As shown schematically also in figure 4, in the mounted condition the lip 18 deflects bending mainly in the zone 18c connecting the portions 18a and 18b, widening the angle α, and in the root zone 18d of the proximal portion 18b. Nevertheless, the end portion 18a is sufficiently rigid so that only the tip 18e of this end portion contacts the wall 20. The side surface 18f facing the wall 20, on the contrary, does not slide against this wall, as was the case with a conventional sealing device of the type shown in figures 1 and 3.

As shown in figure 4, the tip 18e of the end portion 18a of lip 18 defines with the wall 20 a circular contact line extending continuously along the whole circular length of the sealing device.

By having concentrated and limited the contact between the radial wall and the lip 18 in a line of contact instead of an extended area of contact, the overall axial pressure acting between the lip 18 and the wall 20 remains substantially unchanged also in case the shields 14 and 15 are brought excessively near to one another owing to a defective mounting or due to particularly high forces. Also in these conditions, friction will remain within acceptable values, and, as a result, the temperatures that develop will not be such to cause the flexible lip 18 to loose elasticity as a whole.

Experimental tests carried out by the Applicant have shown that the device of the invention exhibits excellent sealing performances also when the axial distance between the two annular shields 14 and 15 is ± 0.35 mm with respect to the preset value. This represents an increase of about 75% with respect to the acceptable axial tolerance of a conventional sealing device, where a positioning error of ± 0.20 mm of one of the two shields with respect to the other could already jeopardise sealing efficiency.

The invention is not intended to be limited to the embodiment described and illustrated herein, which should be considered as an example of an embodiment of the sealing device; rather, the invention may be modified with regard to the shape, dimensions and arrangement of parts, and to constructional and functional details and materials being used. For example, the end or distal portion 18a of the lip and its tip 18e may also take shapes and dimensional ratios different from what is illustrated, provided that they hinder a sliding contact between the side surface 18f and the wall 20.

## Claims

1. A sealing device (10) for sealing an annular gap (11) between the races (12, 13) of a bearing for the hub of a motor vehicle wheel, particularly a heavy motor vehicle, the sealing device (10) comprising:
- a sealing gasket (16) of elastic material, having a substantially V-shaped cross-section, fixed to a first annular shield (15) secured to a first bearing race (12), and
- a second annular shield (14) secured to a second bearing race (13),
wherein the second annular shield (14) forms
- an axial cylindrical portion (19) for being contacted by a radial sealing lip (17) of the gasket (16), and
- a radial wall (20) extending towards the first bearing race (12), for being elastically contacted by an elongated flexible lip (18) of the gasket (16) performing axial sealing action,
and wherein the elongated lip (18) has a free end portion (18a) for elastically contacting the wall (20), said free end portion comprising a tip (18e) and a side having a surface (18f) facing the wall (20);
**characterized in that** the free end portion (18a) projects towards the wall (20) forming with this wall and angle (β) such that only the tip (18e) contacts the wall (20), while the side surface (18f) does not slide against said wall (20).

2. The sealing device of claim 1, **characterised in that** the free end portion (18a) extends from a proximal portion (18b) of the lip (18) and forms an obtuse angle (α) with said proximal portion (18b).

3. The sealing device of claim 2, **characterized in that** the free end portion (18a) and the proximal portion (18b) can be elastically spread apart from one another, whereby the lip (18) deflects mainly
in a zone (18c) connecting the end portion (18a) to the proximal portion (18b), and
in a root zone (18d) of the proximal portion (18b).

4. The sealing device of any of the preceding claims, **characterized in that** the free end portion (18a) forms an acute angle (β) with the wall (20).

5. The sealing device of any of the preceding claims, **characterized in that** the tip (18e) of the free end portion (18a) defines with the wall (20) a circular contact line extending continuously along the whole circumference of the sealing device.
